Europäisches Patentamt

(19) European Patent Office

Office européen des brevets

(11) Publication number: **0 018 153**
**B1**

(12) **EUROPEAN PATENT SPECIFICATION**

(45) Date of publication of patent specification: **09.02.83**

(21) Application number: **80301114.7**

(22) Date of filing: **08.04.80**

(51) Int. Cl.³: **A 23 L 1/04,** A 23 L 1/31
//A23K1/18

(54) Gelled or thickened food products and their preparation.

(30) Priority: **11.04.79 GB 7912816**

(43) Date of publication of application:
**29.10.80 Bulletin 80/22**

(45) Publication of the grant of the patent:
**09.02.83 Bulletin 83/6**

(84) Designated Contracting States:
**AT BE CH DE FR IT LI LU NL SE**

(56) References cited:
**DE - A - 2 311 403**
**FR - A - 2 279 341**
**GB - A - 367 340**
**US - A - 3 367 783**
**US - A - 3 445 243**
**US - A - 3 658 556**
**US - A - 3 928 322**
**US - A - 3 973 008**

(73) Proprietor: **Mars Limited**
**143-149 Fenchurch Street**
**London EC3M 6BN (GB)**

(72) Inventor: **Vernon, Alan John**
**151 Grange Drive**
**Melton Mowbray Leicestershire (GB)**
Inventor: **Cheney, Peter Arthur**
**173 Gynsill Lane**
**Anstey Leicestershire (GB)**
Inventor: **Stares, John**
**8 Solway Close**
**Melton Mowbray Leicestershire (GB)**

(74) Representative: **Day, Jeremy John et al,**
**REDDIE & GROSE 16 Theobalds Road**
**London, WC1X 8PL (GB)**

Courier Press, Leamington Spa, England.

## Gelled or thickened food products and their preparation

This invention relates to edible materials and, especially to a gelling system for use in the preparation of gelled or thickened food products.

A variety of gelling, binding and thickening agents, are used in the food and confectionery industries to impart desired textural and aesthetic qualities to foodstuffs including, for example, meat loaves, canned pie fillings, petfoods, ice cream, yoghurts, formed fruit pieces etc.

It is known that glucomannans such as those extracted from the *Amorphophallus* sp. for example *A. konjac*, when treated with alkalis react to form a very tough thermo-irreversible gel. The pH required for this gelling reaction is at least 9 and a pH greatly in excess of 9 is frequently used. It is widely believed that calcium ions are also essential for this process.

It is also known that gels can be formed using for example pectins and seaweed extracts such as alginates and agar. Alginates and pectates normally form thermo-irreversible gels in the presence of divalent ions. The reaction rate and strength of these thermo-irreversible gels increases with decreasing pH. By control of divalent ion availability, which is itself pH dependent, a thermo-reversible gel can be produced using pectates.

Certain forms of carrageenan, especially kappa and iota carrageenans, but not lambda-carrageenan, can also be used to form gels. These gels are thermo-reversible and although they can form gels at low pH, they are readily hydrolysed if heated at temperatures in excess of 100 degrees Centigrade at pH values below 7. The extent of hydrolysis is very pH dependent increasing sharply with decreasing pH.

It is further known that there is an interaction between kappa carrageenan and locust bean gum (carob gum) which results in enhanced viscosity development and gelation properties. A mixture of carob gum and carrageenan is widely used to provide viscous gravies, in for example canned pie fillings, and thermo-reversible gels in for example canned petfoods, brawns and table jellies. An additional advantage of the interaction is that the carrageenan gel texture is modified to provide additional desirable characteristics such as reduced brittleness and increased softness.

In contrast to the thermo-irreversible gels of calcium alginate and calcium polypectate, carrageenan/carob gum mixtures cannot be used to provide structure in formed products which are to be subjected to heating above the melting point of the gel system. Thus, for example the carrageenan/carob gum gelling system cannot form the basis of a formed chunk in a product which requires to be heated above the melting point of the gelling system since the chunk disintegrates on melting of the gel.

Until now, carob gum has been thought to be unique in its ability to maximise the gelling or thickening properties of carrageenan. Although, like carob gum, guar gum and tara gum are galactomannans, their interaction with carrageenans is considerably less than that of carob gum and these polysaccharides are of little use in this context.

It has been proposed in Japanese published patent application 1978/52648 to produce a gelled seaweed food by blending dissolved or colloidised seaweed with dissolved Devils Tongue material (a glucomannan containing material). The blend is caused to gel by the normal method for gelling glucomannan, namely, the addition of alkali. The gel is a thermo-irreversible gel.

The presence of high alkalinity in food products is generally undesirable and accordingly the presence of a thickened or gelled phase which has been produced at high pH in most food products is very undesirable.

This invention is based on the observation that in complete contrast to the teaching of the prior art, glucomannans can be caused to form thermo-irreversible gels at a pH not higher than 8 if they are heated together with a carrageenan at a temperature above 100°C for a sufficient period.

Moreover it has been observed that in the presence of certain foodstuffs, for example meats or other proteinaceous materials of both vegetable and animal origin (hereinafter referred to generally as "meats"); the same systems under the same conditions form thermo-reversible gels. It has further been observed that at pH values below 5.0, the glucomannan/carrageenan system always produces a thermo-reversible gel. The thermo-reversible gels can be formed simply by incorporating a mixture of powdered glucomannan and carrageenan in hot water, or can be formed in complex systems such as sterilised canned meat products. Glucomannan/carrageenan combinations are not only stable to heat sterilisation but are also less sensitive to low pH conditions during heat treatment than corresponding carob gum/carrageenan solutions. This property is of especial value in foods which require heating in the presence of acid in low concentrations.

This invention therefore provides an edible material having a pH not higher than 8 comprising a gelled or thickened aqueous phase containing a mixture or a reaction product of at least one glucomannan and at least one carrageenan.

Either or both the glucomannan or carrageenan may be used in a crude form (i.e. as a natural product containing the polysaccharide material), as the refined polysaccharide, or in an intermediary form.

The product of the invention is an edible material having a pH not higher than 8, which is

2

structured, or shaped, or bound, substantially by a gel matrix produced from a mixture of glucomannan and carrageenan in the aqueous phase.

The edible material of the invention may be any foodstuff or confectionery in which it is desired to have a gelled or thickened phase. As a thermo-irreversible gel the edible material may comprise, for example a gelled chunk which, with the addition of flavouring and colourings etc. may be used as a meat analogue and in this form the material may have a texture very similar to cooked lung. As a thermo-reversible gel the edible material may be for example a meat-in-jelly petfood or at very acid pH down to about say 3 a thermo-reversible gel may be present in gelled deserts and confectionery, especially fruit based products in which the fruit acids considerably lower the pH.

Any carrageenan or carrageenan-type polysaccharide, for example, furcellaran is suitable. The carrageenan may be used in a crude form (e.g. washed seaweed) or in an alkaline modified form or in the form of the conventional carrageenan extracts of commerce. The carrageenan may be any form of carrageenan such as lambda, iota, kappa carrageenan or any mixture, although the preferred carrageenan types are those containing some kappa carrageenan.

The glucomannans may be used in a purified form or in a crude form. The crude form may merely be the ground source of glucomannan without further treatment. Glucomannans are present in a variety of plants. For example they are found in yams, such as Elephant Yam, in seeds such as the endosperm of *Iris ochroleuca* and *Iris sibirica* and in leaves such as those of the plant *Aloe vera*. The preferred glucomannans are found in the corms of the *Amorphophallus* genus and in particular *A. riviera* (syn. *A. konjac*), *A. oncophyllus* and *A. variabilis*.

The preferred ratio of glucomannan to carrageenan is in the range 20:1 to 1:20 especially 1:10 to 10:1, and the preferred concentration of the combined mixture in the aqueous phase is 0.01% to 5%.

The mechanism of the thermo-irreversible gel formation is not fully understood but the degree of gel formation appears to be governed by pH, the glucomannan and carrageenan contents and the heat input. The gelling system must be heated to a temperature of at least 100°C and the particular time needed for gel formation depends basically on the temperature. Under the heating conditions normally applied for heat sterilisation, for example, 130°C for 50 to 60 minutes, a thermo-irreversible gel will normally be formed with total carrageenan and glucomannan content as low as 1% when the pH is between 6 and 8. The amount of heat required seems to depend on both pH and gum content but appears to be at a minimum at pH 7 when the concentration of glucomannan and carrageenan is high.

The following Examples illustrate the invention. In the Examples the carrageenans were commercially available samples of the type specified and the *Amorphophallus* sp. extract contains approximately 90% glucomannan.

Examples

1. Thermo-reversible gels

A petfood product was prepared to the following recipe:—

| | Ingredient | . | % by weight |
|---|---|---|---|
| "Meats" | Offal Meats | | 40 |
| | Fibrous Muscle Meat | | 16 |
| | Hydrated T.V.P. | | 10 |
| | Condensed Whey | | 3 |
| "Gravy" | Dye Solutions | | 0.7 |
| | Water | | 29.09 |
| | Potassium Chloride | | 0.5 |
| | Kappa-carrageenan | | 0.16 |
| | Carob gum (Industrial Grade) | | 0.55 |
| | | | 100.00 |

The gravy was prepared by mixing all the ingredients at room temperature using a high shear stirrer. Sufficient alkali was added to the gravy in order to maintain a final product pH of 6.2. The gravy was then added to the coarsely chopped "meats" and the product was filled into metal cans, which were sealed and heat sterilised in a pressure cooker at 130°C for 60 minutes after which time the cans were immersed in cold water for half an hour. The product was examined after 1 day.

A similar product was prepared but instead of the 0.16% carrageenan and 0.55% carob gum added to the gravy, 0.11% carrageenan and 0.55% glucomannan extracted from *Amorphophallus sp.* was used.

Upon examination the products were assessed to be similar in appearance, taste and firmness. The product containing glucomannan/carrageenan was rated as tougher to cut than the control containing carob gum/carrageenan even though the carrageenan level was lower.

The pH of both products was 6.2.

Both gels were thermo-reversible each melting at 75°C and setting at 42°C and 52°C, respectively.

3

Example 2

This example demonstrates the greater stability of glucomannan/carrageenan solutions to heating at low pH.

The process of Example 1 was repeated using the following petfood recipe.

| | Ingredient | Control product % by weight | Test product % by weight |
|---|---|---|---|
| Meat | Offal Meats | 37 | 37 |
| | Fibrous Muscle Meat | 16 | 16 |
| | Hydrated T.V.P. | 10 | 10 |
| | Condensed Whey | 6 | 6 |
| Gravy | Dye Solutions | 0.7 | 0.7 |
| | Water | 29.09 | 29.09 |
| | Potassium Chloride | 0.5 | 0.5 |
| | Kappa carrageenan | 0.16 | 0.16 |
| | Carob gum (Industrial Grade) | 0.55 | — |
| | Amorphophallus sp. extract | — | 0.55 |
| | | 100.00 | 100.00 |

The pH of both products was 5.7.

The control product containing carob gum barely supported its own weight and consisted of meats surrounded by low areas of very weak gel slurry and a large quantity of free watery liquid. This is typical of the degradation of this gelling system subjected to high temperatures at relatively low pH.

In contrast the product containing glucomannan was an integral solid meat and jelly pack, self supporting and containing areas of clear, soft, tough gel without syneresis.

Example 3

This Example demonstrates the preparation of a "formed" solid which is stable to heat in a thermo-irreversible structure using carrageenan/glucomannan.

A 6.8 pH buffer solution was prepared using

$$
\left.
\begin{array}{l}
0.4 \ \% \ NaH_2PO_4 \quad 2H_2O \\
0.44\% \ Na_2HPO_4 \\
0.2 \ \% \ KCl
\end{array}
\right\} \text{ In distilled water}
$$

2 parts of kappa carrageenan and 5 parts of *Amorphophallus sp.* extract were dispersed in 1000 parts of the buffer solution and heated to the boil with stirring.

The dispersion was heated in an autoclave at 130°C for *50* minutes. After removal from the autoclave the resulting firm, very tough, solid was cut into chunks. The chunks exhibited remarkable resistance to shearing forces and had a texture similar to cooked lung. With the addition of flavourings and colourings the chunks make an excellent meat analogue.

The chunks were heat sterilised in water in sealed cans at 130°C for 1 hour. The chunks retained their separate identity demonstrating thermo-irreversibility of the gel.

Example 4

This example demonstrates the use of different carrageenans.

(a) Use of iota carrageenan

The process of Example 1 was repeated using the following recipe:—

| Ingredient | Control product % by weight | Test product % by weight |
|---|---|---|
| Offal meats | 37 | 37 |
| Fibrous meat | 7 | 7 |
| Hydrated T.V.P. | 26 | 26 |
| Dye solutions | 1.5 | 1.5 |
| Water | 27.4 | 27.0 |
| Sodium Chloride | 0.4 | 0.4 |
| Calcium Hydroxide | 0.1 | 0.1 |
| Iota carrageenan | 0.6 | 0.6 |
| Amorphophallus sp. extract | — | 0.4 |
| pH | 6.1 | 6.3 |

4

**0018153**

The control product containing no glucomannan was barely integral just supporting its own weight. The pack readily broke down under slight pressure to reveal glossy meats in a viscous gravy. There were small areas of a very weak paste-like gel.

In contrast, the product containing the glucomannan was integral easily supporting its own weight. This pack had significant areas of an elastic clear glossy gel.

(b) Use of lambda carrageenan

The process of Example 1 was repeated except that:—

In the control product the carrageenan and carob gum were replaced by 0.5% Lambda carrageenan and the difference was corrected for by adjustment of the water content. The pH of the product was 6.6.

In the test product the carrageenan and carob gum were replaced by 0.5% Lambda carrageenan and 0.4% *Amorphophallus sp.* extract. Again the recipe was corrected by adjustment of water content. The pH of the product was 6.8.

The control was a non-self supporting meat in gravy product. The gravy was viscous, glossy and clear.

The product containing the glucomannan was firmer and more resistant to rupture and had some areas of clear gel.

Example 5

This example demonstrates the use of different types of glucomannan source.

Example 1 was repeated with the carrageenan and carob gum replaced by the following ingredients:—

In product A, *Amorphophallus oncophyllus* extract (0.31%) and kappa carrageenan (0.32%) were used (pH 6.8).

In product B, the process and recipe of product A was repeated but replacing the 0.31% *A. oncophyllus* extract by 0.25% *A. riviera* extract (pH 6.7).

In product C, the process and recipe of product A was repeated but replacing the 0.31% *A. oncophyllus* extract by 0.31% glucomannan from Indonesian *Amorphophallus sp.* extract prepared by the process described in Japanese Published Patent Application 1979/49346 (pH 6.8).

Examination of the finished products after one day showed that all three were virtually identical being integral solid meat and jelly packs, self supporting and containing areas of clear, soft, tough gel without syneresis.

Example 6

This example demonstrates the interaction between glucomannan and carrageenan to produce thermo-irreversible gels under different pH conditions.

1. Buffer solutions at pH values of 5.5, 6.5, and 7.0 were prepared to the following formulation:—

| pH | mg $Na_2HPO_4$ | mg $NaH_2PO_4$ |
|-----|-----|-----|
| 5.5 | 205 | 4795 |
| 6.5 | 1615 | 3385 |
| 7.0 | 3090 | 1910 |

Each of the above dry salt mixtures was dissolved in 500 ml of distilled water.

Kappa carrageenan was dissolved in each buffer at 80°C and at a concentration of 1% *w/v*.

Once the carrageenan has dissolved, 1% glucomannan as used in Example 5 product C is added while mixing with a high shear mixer.

The solutions were sealed in cans, heat sterilised at 130°C for 1 hour, cooled and examined.

For comparison purposes, the above exercise was repeated replacing the two gums by 1% of the glucomannan alone in one case and by 1% kappa carrageenan alone in the second case.

The results obtained are noted below.

5

|  | 1% kappa-carrageenan | 1% Glucomannan | 1% kappa-carrageenan and 1% Glucomannan |
|---|---|---|---|
| pH 5.5 | Thin solution | Slightly viscous solution | Tough, slightly brittle gel; similar texture to alginate gels |
| pH 6.5 | Very weak, brittle gel; Excess syneresis | viscous solution | Tough brittle gel |
| 7.0 | Weak, brittle gel; some syneresis | Viscous solution; some very weak gel pieces present | Tough brittle gel; |

The gels produced using 1% glucomannan in conjunction with 1% kappa carrageenan were cut into chunks and canned in water. These were then re-processed at 130°C for 1 hour.
After re-processing, the chunks remained integral and discrete.

Example 7

This example relates to a chocolate jellied-milk.

| Recipe | Test product | Control |
|---|---|---|
| Calcium sulphate | 0.50 g | 0.50 g |
| Potassium citrate | 1.25 g | 1.25 g |
| Sugar | 77.00 g | 77.00 g |
| Chocolate powder | 10.00 g | 10.00 g |
| Low methoxyl pectin (DE of 30—50%) | 2.00 g | 2.00 g |
| Potassium-sensitive carrageenan | 0.62 g | 0.62 g |
| Calcium-sensitive carrageenan | 1.19 g | 1.19 g |
| Glucomannan as used in Example 5 product C | 0.95 g | — |
| Carob gum (Industrial Grade) | — | 0.95 g |

The above dry powders were weighed out and mixed together.
570 ml of milk was then heated to 85°C and the dry powders were whisked in using an egg-whisk.
The resulting mixture was then allowed to set at room temperature for 2—3 hours, to form the product.
The recipe allows for the addition of preservatives, flavours and food-grade colours although these are not included in the recipe as given.
The control product, containing carob gum was a neutral (pH 6.1) chocolate-flavoured dessert gel that cut cleanly with a spoon. There was some syneresis. The product containing glucomannan had a pH of 5.97 and a similar texture but showed no syneresis.

Example 8

This example relates to a fruit-flavoured dessert gel and demonstrates the use of glucomannans in low pH food systems.

| Receipe | Test product | Control |
|---|---|---|
| Calcium sulphate | 0.5 g | 0.5 g |
| Adipic acid | 2.5 g | 2.5 g |
| Potassium citrate | 1.25 g | 1.25 g |
| Sugar | 77.00 g | 77.00 g |
| Low methoxyl pectin (DE 30—50%) | 2.00 g | 2.00 g |
| Potassium-sensitive carrageenan | 0.62 g | 0.62 g |
| Calcium-sensitive carrageenan | 1.19 g | 1.19 g |
| Glucomannan as used in Example 5 product C | 0.95 g | — |
| Carob gum (Industrial Grade) | — | 0.95 g |

The above powders were weighed out and mixed together.

570 ml of pineapple juice was heated to 85°C and the dry powders incorporated with an egg whisk.

The resulting mixture was then allowed to set for 2—3 hours at room temperature to form the product.

The formulation allows for the addition of preservatives, flavours and food-grade colours as required although these are not included in the recipe above.

The control product containing carob gum was an acidic (pH 3.3) pineapple-flavoured dessert gel that cut cleanly with a spoon. There was some syneresis. The product containing glucomannan had a pH of 3.3 and a similar texture but showed no syneresis.

**Claims**

1. An edible material having a pH not higher than 8 comprising a gelled or thickened aqueous phase containing a mixture or a reaction product of at least one glucomannan and at least one carrageenan.

2. An edible material as claimed in claim 1, wherein the gelled aqueous phase is a thermo-irreversible gel.

3. An edible material as claimed in claim 2, wherein the gelled phase is in the form of chunks or lumps of gelled material.

4. An edible material as claimed in claim 3, wherein the gelled material contains flavouring and/or colourings to impart the flavour and appearance of meat thereto.

5. An edible material as claimed in claim 1, wherein the gelled aqueous phase is a thermo-reversible gel.

6. An edible material as claimed in claim 5, wherein the gelled aqueous phase comprises the jelly phase of a meat-in-jelly product.

7. An edible material as claimed in claim 5, wherein the gelled aqueous phase forms the basis of a dessert gel.

8. An edible material as claimed in any one of claims 1 to 6, having a pH within the range from 5 to 8.

9. An edible material as claimed in claim 5 having a pH within the range from 3 to 6.

10. An edible material as claimed in any one of claims 1 to 9, wherein the ratio of glucomannan to carrageenan is within the range of from 20:1 to 1:20, preferably 1:10 to 10:1.

11. An edible material as claimed in any one of claims 1 to 10, wherein the concentration of total amount of glucomannan and carrageenan in the aqueous phase is from 0.01% to 5% by weight of the aqueous phase.

12. An edible material as claimed in any one of claims 1 to 11, wherein the carrageenan is a carrageenan containing at least some kappa carrageenan.

13. An edible material as claimed in any one of claims 1 to 12, wherein the glucomannan is a glucomannan from the corms of the Amorphophallus genus.

14. A method for making an edible material which comprises adding at least one glucomannan and at least one carrageenan to other edible ingredients and heating the thus prepared material at a temperature of at least 100°C to cause formation of a gelled or thickened aqueous phase in the material.

15. A method as claimed in claim 14, wherein the other ingredients include meats or other proteinaceous materials of vegetable and/or animal origin and wherein the edible product comprises the proteinaceous material in a thermo-reversible gelled aqueous phase.

16. A method for the production of an edible material wherein a mixture of at least one glucomannan and at least one carrageenan in water, optionally with the addition of flavourings and/or colourings, is heated at a temperature of at least 100°C to cause formation of a thermo-irreversible gel.

7

**0018153**

Patentansprüche

1. Essbares Material mit einem pH von höchstens 8, gekennzeichnet durch eine gelierte oder verdickte wässrige Phase, die ein Gemisch aus mindestens einem Glucomannan und mindestens einem Karragheenan, oder ein Umsetzungsprodukt daraus, enthält.

2. Essbares Material nach Anspruch 1, dadurch gekennzeichnet, dass die gelierte wässrige Phase ein thermo-irreversibles Gel ist.

3. Essbares Material nach Anspruch 2, dadurch gekennzeichnet, dass die gelierte Phase in Form von Brocken oder Klumpen aus geliertem Material vorliegt.

4. Essbares Material nach Anspruch 3, dadurch gekennzeichnet, dass das gelierte Material Geschmacks-und/oder Farbstoffe enthält, um ihm den Geschmack und das Aussehen von Gleisch zu verleihen.

5. Essbares Material nach Anspruch 1, dadurch gekennzeichnet, dass die gelierte wässrige Phase ein thermo-reversibles Gel ist.

6. Essbares Material nach Anspruch 5, dadurch gekennzeichnet, dass die gelierte wässrige Phase die Gallert-phase eines Fleisch-in-Geleeprodukts darstellt.

7. Essbares Material nach Anspruch 5, dadurch gekennzeichnet, dass die gelierte wässrige Phase die Grundlage für ein Süssspeisegelee bildet.

8. Essbares Material nach einem der Ansprüche 1 bis 6, dadurch gekennzeichnet, dass es einen pH im Bereich von 5 bis 8 aufweist.

9. Essbares Material nach Anspruch 5, dadurch gekennzeichnet, dass es einen pH im Bereich von 3 bis 6 aufweist.

10. Essbares Material nach einem der Ansprüche 1 bis 9, dadurch gekennzeichnet, dass das Verhältnis von Glucomannan zu Karragheenan im Bereich 20:1 bis 1:20, vorzugsweise 1:10 bis 10:1, liegt.

11. Essbares Material nach einem der Ansprüche 1 bis 10, dadurch gekennzeichnet, dass die Konzentration der Gesamtmenge Glucomannan und Karragheenan in der wässrigen Phase 0,01 Gew.-% bis 5 Gew.-% der wässrigen Phase beträgt.

12. Essbares Material nach einem der Ansprüche 1 bis 11, dadurch gekennzeichnet, dass das verwendete Karragheenan mindestens eine kleine Menge kappa-Karragheenan enthält.

13. Essbares Material nach einem der Ansprüche 1 bis 12, dadurch gekennzeichnet, dass das verwendete Glucomannan aus Knollen der Gattung Amorphophallus stammt.

14. Verfahren zur Herstellung eines essbaren Materials, dadurch gekennzeichnet, dass man mindestens ein Glucomannan und mindestens ein Karragheenan den übrigen essbaren Bestandteilen zusetzt und das so bereitete Material auf eine Temperatur von mindestens 100°C erhitzt, damit sich dadurch eine gelierte oder verdickte wässrige Phase im Material bildet.

15. Verfahren nach Anspruch 14, dadurch gekennzeichnet, dass es sich bei den übrigen Bestandteilen unter anderem um Gleisch oder sonstige proteinhaltige Materialien pflanzlichen und/oder tierischen Ursprungs handelt, und dass das essbare Produkt das proteinhaltige Material in einer thermo-reversiblen gelierten wässrigen Phase enthält.

16. Verfahren zur Herstellung eines essbaren Materials, dadurch gekennzeichnet, dass man ein Gemisch aus mindestens einem Glucomannan und mindestens einem Karragheenan in Wasser, gegebenenfalls unter Zusatz von Geschmacks-und/oder Farbstoffen auf eine Temperatur von mindestens 100°C erhitzt, damit sich ein thermo-irreversibles Gel bildet.

**Revendications**

1. Matière comestible ayant un pH non supérieur à 8 et comprenant une phase aqueuse épaissie ou gélifiée qui contient un mélange ou un produit de réaction d'au moins un glucomannane et d'au moins un carragheenane.

2. Matière comestible suivant la revendication 1, dans laquelle la phase aqueuse gélifiée est un gel thermo-irréversible.

3. Matière comestible suivant la revendication 2, dans laquelle la phase gélifiée se présente sous la forme de morceaux ou fragments de matière gélifiée.

4. Matière comestible suivant la revendication 3, dans laquelle la matière gélifiée contient des agents aromatisants et/ou colorants pour lui conférer l'arôme et l'aspect de la viande.

5. Matière comestible suivant la revendication 1, dans laquelle la phase aqueuse gélifiée est un gel thermo-réversible.

6. Matière comestible suivant la revendication 5, dans laquelle la phase aqueuse gélifiée comprend la phase de gelée d'un produit viande en gelée.

7. Matière comestible suivant la revendication 5, dans laquelle la phase aqueuse gélifiée forme la base d'un dessert gélifiée.

8. Matière comestible suivant l'une quelconque des revendications 1 à 6, ayant un pH de l'intervalle de 5 à 8.

9. Matière comestible suivant la revendication ayant un pH de l'intervalle de 3 à 6.

8

# 0018153

10. Matière comestible suivant l'une quelconque des revendications 1 à 9, dans laquelle le rapport du glucomannane au carragheenane tombe dans l'intervalle de 20:1 à 1:20 et de préférence de 1:10 à 10:1.

11. Matière comestible suivant l'une quelconque des revendications 1 à 10, dans laquelle la concentration de la quantité totale du glucomannane et de carragheenane dans la phase aqueuse est de 0,01 à 5% en poids de la phase aqueuse.

12. Matière comestible suivant l'une quelconque des revendications 1 à 11, dans laquelle le carragheenane est un carragheenane contenant au moins une certaine quantité de carragheenane kappa.

13. Matière comestible suivant l'une quelconque des revendications 1 à 12, dans laquelle le glucomannane est un glucomannane provenant des rhizomes du genre Amorphophallus.

14. Procédé de préparation d'une matière comestible qui comprend l'addition d'au moins un glucomannane et d'au moins un carragheenane à d'autres constituants comestibles et le chauffage de la matière ainsi préparée jusqu'à une température d'au moins 100°C pour provoquer la formation d'une phase aqueuse gélifiée ou épaissie dans la matière.

15. Procédé suivant la revendication 14, dans lequel les autres constituants comprennent des viandes ou autres matières protéiques d'origine végétale et/ou animale et dans lequel le produit comestible comprend la matière protéique dans une phase aqueuse gélifiée thermo-réversible.

16. Procédé de production d'une matière comestible, dans lequel un mélange d'au moins un glucomannane et d'au moins un carragheenane dans de l'eau, éventuellement avec addition d'agents aromatisants et/ou colorants, est chauffé à une température d'au moins 100°C pour provoquer la formation d'un gel thermo-irréversible.

9